# EUROPÄISCHE PATENTSCHRIFT

(11) **EP 0 725 243 B1**
(45) Veröffentlichungstag und Bekanntmachung des Hinweises auf die Patenterteilung: **03.05.2000**
(21) Anmeldenummer: 95115924.3
(22) Anmeldetag: 10.10.1995
(51) Int. Cl.: F16J 15/32, G01P 3/487, G01P 3/44

(54) **Dichtungsanordnung**
Sealing arrangement
Dispositif d'étanchéité

(30) Priorität: 03.02.1995 DE 19503469
(43) Veröffentlichungstag der Anmeldung: 07.08.1996
(73) Patentinhaber: Firma Carl Freudenberg, 69469 Weinheim (DE)
(72) Erfinder: Burger, Stefan, D-69469 Weinheim (DE); Eckel, Hans-Gerd, Dr., D-69514 Laudenbach (DE); Kober, Horst, D-69469 Weinheim (DE); Lannert, Berthold, D-64658 Fürth (DE)

(56) Entgegenhaltungen:
- EP-A- 0 375 019
- EP-A- 0 557 932
- EP-A- 0 647 851
- US-A- 5 184 069

## Beschreibung

Die Erfindung betrifft eine Dichtungsanordnung, umfassend einen Dichtring mit einem sich im wesentlichen in radialer Richtung erstreckenden Stützring, einem ersten und zweiten Dichtteil sowie einem Multipolring aus magnetisierbarem Werkstoff, der auf der einem Drehzahlsensor zugewandten Seite des Stützrings angeordnet ist, und in Umfangsrichtung aufeinanderfolgende, sich in radialer Richtung erstreckende Nord- und Südpole aufweist, wobei der Stützring in radialer Richtung einerseits mit dem ersten Dichtteil verbunden ist, der relativ drehfest, statisch dichtend ein erstes Maschinenteil anliegend berührt und in radialer Richtung andererseits mit dem zweiten Dichtteil verbunden ist, der relativ drehbeweglich, dynamisch abdichtend an das zweite Maschinenteil anlegbar ist, wobei der erste und der zweite Dichtteil jeweils aus einem elastomeren Werkstoff bestehen und wobei der Multipolring zur Erfassung von Drehbewegungen des ersten Maschinenteils um seine Achse an einem Drehzahlsensor vorbeibeweglich ist.

Aus der EP 0 375 019 A1 ist eine derartige Dichtungsanordnung bekannt, wobei der Dichtring zur Erfassung von Drehbewegungen um seine Achse einen Multipolring aufweist, der an einem Drehzahlsensor vorbeibeweglich ist. Der Multipolring ist separat vom Dichtteil, das aus einem elastomeren Werkstoff besteht, erzeugt. Der Multipolring ist auf der Oberfläche des aus einem elastomeren Werkstoff bestehenden Dichtrings befestigt.

Derartige Dichtungsanordnungen gelangen beispielsweise zur Abdichtung von Radlagern in Kraftfahrzeugen zur Anwendung. Ist das Kraftfahrzeug mit einer ABS-Bremsanlage ausgestattet, umfaßt die Dichtungsanordnung einen induktiven Geber zur Erfassung der Drehzahl des Fahrzeugrades, wobei der Geber, der mit dem Fahrzeugrad umläuft und zumeist aus einer Scheibe aus metallischem Werkstoff besteht, mit in Umfangsrichtung gleichmäßig verteilten Oberflächendiskontinuitäten an dem Drehzahlsensor vorbeibewegbar ist. Die Oberflächendiskontinuitäten können beispielsweise durch in Umfangsrichtung verteilte Ausnehmungen oder Einprägungen gebildet sein. Dabei ist allerdings zu beachten, daß die Herstellung derartiger Dichtungsanordnungen aufwendig und in wirtschaftlicher Hinsicht wenig zufriedenstellend ist. Außerdem weist der mit einem metallischen Sensorring versehene Dichtring eine vergleichsweise große Masse auf. Bei Beaufschlagung der Oberflächendiskontinuitäten mit Verunreinigungen, wie beispielsweise Spritzwasser, Staub und/oder Schlamm kann es zu Übermittlungsfehlern an den Drehzahlsensor kommen, wodurch eine zuverlässige Drehzahl-Ermittlung beeinträchtigt wird.

Der Erfindung liegt die Aufgabe zugrunde, die obengenannten Nachteile zu vermeiden und eine Dichtungsanordnung zu zeigen, die einfach und kostengünstig herstellbar ist, ausgezeichnete Gebrauchseigenschaften bezüglich der Abdichtung und Drehzahlerfassung während einer langen Gebrauchsdauer aufweist und ein vergleichsweise geringeres Gewicht hat.

Diese Aufgabe wird erfindungsgemäß durch die Merkmale von Anspruch 1 gelöst. Auf vorteilhafte Ausgestaltungen nehmen die Unteransprüche Bezug.

Zur Lösung der Aufgabe ist es vorgesehen, daß der Multipolring aus einem pastösen, aushärtbaren Werkstoff besteht und als filmartig dünne Zwischenschicht ausgebildet ist und daß der Multipolring vom elastomeren Werkstoff des ersten und/oder zweiten Dichtteils vollständig überdeckt ist.

Der Multipolring weist eine außerordentlich geringe Masse auf und ist durch die vollständige Überdeckung durch den ersten und/oder zweiten Dichtteil in ausgezeichneter Weise vor äußeren Einflüssen geschützt. Bevorzugt ist der Multipolring zumindest vom ersten Dichtteil überdeckt. Die Dichtungsanordnung kann dadurch beispielsweise auch zum Abdichten von Radlagern zur Anwendung gelangen, die in Baustellenfahrzeugen eingebaut sind. Feuchtigkeit, Staub oder Schlamm vermögen die Drehzahlerfassung des ersten Maschinenteils nicht nachteilig zu beeinflussen. Dadurch, daß der Multipolring filmartig dünn ausgebildet ist und daher nur ein geringes Gewicht hat, weist der gesamte Dichtring nur eine vergleichsweise geringe Trägheitsmasse auf, wodurch die mechanische Belastung auf den Dichtring bei Drehzahländerungen des ersten Maschinenteils nur sehr gering ist.

Gemäß einer vorteilhaften Ausgestaltung ist es möglich, daß der Multipolring aus zumindest zwei voneinander abweichenden Magnetwerkstoffen besteht. Hierbei ist von Vorteil, daß durch die Verwendung von Mischpasten aus verschiedenen Magnetwerkstoffen die Möglichkeit besteht, ein breitbandiges Temperatur-/Signalverhalten zu erzielen. Weitgehend unabhängig von auftretenden Temperaturen wird dadurch ein gleichbleibend gutes Signal vom Drehzahlsensor empfangen.

Die Magnetwerkstoffe können innerhalb des Multipolrings eine im wesentlichen homogene Verteilung aufweisen. Hierbei ist von Vorteil, daß der Multipolring durch das Aufbringen nur einer Paste einfach und kostengünstig herstellbar ist.

Nach einer anderen Ausgestaltung können die Magnetwerkstoffe in Richtung des Drehzahlsensors schichtweise miteinander verbunden sein. Die unterschiedlichen Magnetpasten werden durch ein Druck- oder Dosierverfahren an den Stützring appliziert, wobei jede der Schichten vor dem Aufbringen der nächsten Schicht zunächst aushärten sollte. Die Anpassung der Werkstoffe des Multipolrings an die unterschiedlichsten Gegebenheiten des Anwendungsfalles sind durch einen derartigen, schichtweisen Aufbau problemlos möglich.

Der Multipolring und der Stützring sind adhäsiv verbunden und können eine vormontierbare Einheit bilden. Im Anschluß an die Applizierung des Multipolrings an den Stützring und dessen Aushärtung wird die vormontierbare Einheit mit den beiden Dichtteilen versehen.

Außerdem betrifft die Erfindung ein Verfahren zur Herstellung eines zuvor beschriebenen Dichtrings, wobei in einem ersten Verfahrensschritt zumindest ein pastöser magnetisierbarer Werkstoff zur Erzeugung des Multipolrings auf der dem Drehzahlsensor zugewandten Seite des Stützrings aufgebracht wird, wobei der ausgehärtete Multipolring in einem zweiten Verfahrensschritt magnetisiert wird und in einem dritten Verfahrensschritt durch Vulkanisation des ersten und zweiten Dichtteils von zumindest dem elastomeren Werkstoff des ersten Dichtteils überdeckt wird. Die Herstellung des Multipolrings, der bezüglich seines Temperatur-/Signalverhaltens an die jeweiligen Gegebenheiten des Anwendungsfalles angepaßt ist, ist durch ein derartiges Verfahren einfach möglich. Dadurch, daß der Multipolring bei einem solchen Verfahren bereits im zweiten Verfahrensschritt- nach seiner Aushärtung und vor der Vulkanisierung des ersten und zweiten Dichtteils- magnetisiert wird, können die magnetischen Eigenschaften des Multipolrings bereits vor dem Anformen der beiden Dichtteile an den Stützring überprüft werden. Sollten die magnetischen Eigenschaften bei der Überprüfung nicht den an sie gestellten Anforderungen genügen, kann dies festgestellt werden, noch bevor in einem weiteren Verfahrensschritt die Dichtteile anvulkanisiert werden.

Nach einem anderen Verfahren kann in einem ersten Verfahrensschritt zumindest ein pastöser magnetisierbarer Werkstoff zur Erzeugung des Multipolrings auf der dem Drehzahlsensor zugewandten Seite des Stützrings aufgebracht werden, wobei der ausgehärtete Multipolring in einem zweiten Verfahrensschritt durch Vulkanisation des ersten und zweiten Dichtteils von zumindest dem elastomeren Werkstoff des ersten Dichtteils überdeckt wird und wobei der Multipolring in einem dritten Verfahrensschritt magnetisiert wird.

Der magnetisierbare Werkstoff des Multipolrings kann aus zumindest zwei homogen verteilten Magnetwerkstoffen bestehen, die durch ein Druck- oder Dosierverfahren an die dem Drehzahlsensor zugewandte Stirnseite des Stützrings appliziert werden.

Nach einem weiteren Verfahrensschritt besteht die Möglichkeit, daß zur Erzeugung des Multipolrings zumindest zwei Magnetwerkstoffe nacheinander auf den Stützring aufgebracht werden und daß der zweite Magnetwerkstoff erst im Anschluß an die Aushärtung des ersten Magnetwerkstoffs aufgebracht wird. Bei einem derartigen Verfahren können Multipolringe durch eine entsprechende Kombination der Magnetwerkstoffe in besonders gutem Maße an die jeweiligen Gegebenheiten des Anwendungsfalles angepaßt werden.

Sowohl bei Verwendung einer Paste aus zumindest zwei homogen verteilten Magnetwerkstoffen als auch bei dem schrittweisen Aufbringen verschiedener Magnetwerkstoffe nacheinander sind derartige Kombinationen von Magnetwerkstoffen zu wählen, die ein möglichst breitbandiges Temperatur-/Signal-Verhalten erzielen und dadurch unabhängig von den Temperaturen, bei denen der Dichtring zur Anwendung gelangt, eine einwandfreie Übertragung der Signale an den Drehzahlsensor ermöglichen.

Der pastöse Werkstoff zur Erzeugung des Multipolrings kann auf den Werkstoff des Stützrings aufgebracht und die so gebildete vormontierte Einheit im Anschluß an die Aushärtung des pastösen Werkstoffs des Multipolrings zur Form des Stützrings umgeformt und anschießend ausgestanzt werden. Die Herstellung des Dichtrings ist dadurch vereinfacht, daß das später zum Stützring verarbeitete Blech bereits als Coil einseitig mit Magnetpaste beschichtet ist. Im Hinblick auf die einfache und kostengünstige Herstellung großer Stückzahlen ist dies von Vorteil.

Eine weitere Vereinfachung bei der Herstellung des Dichtrings kann dadurch erzielt werden, daß der erste und zweite Dichtteil durch Vulkanisation von nur einem elastomeren Werkstoff erzeugt werden. Der Dichtring ist als Ein-Stoff-Dichtring ausgebildet, wobei ein Werkstoff zur Anwendung gelangt, der einerseits gute Eigenschaften bezüglich der statischen Abdichtung des ersten Dichtteils aufweist und andererseits nur einen geringen abrasiven Verschleiß des dynamisch beanspruchten zweiten Dichtteils und dadurch gute Gebrauchseigenschaften während einer langen Gebrauchsdauer sicherstellt.

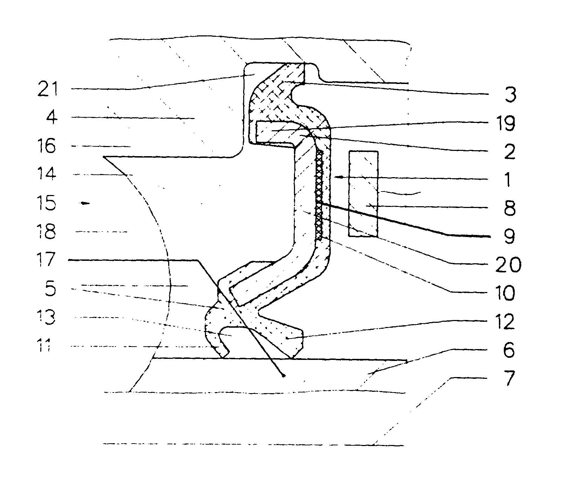

Ein Ausführungsbeispiel der erfindungsgemäßen Dichtungsanordnung wird nachfolgend anhand der Zeichnung näher erläutert.

In der Zeichnung ist eine Dichtungsanordnung gezeigt, die im wesentlichen aus einem Dichtring 1 besteht, der in radialer Richtung zwischen einem ersten und einem zweiten Maschinenteil 4, 6 angeordnet ist. In diesem Ausführungsbeispiel bildet die Dichtungsanordnung einen Bestandteil einer Radaufhängung eines Kraftfahrzeugs, wobei der erste und der zweite Maschinenteil 4, 6 Bestandteile eines Radlagers bilden, das als Wälzlager 15 ausgeführt ist. Das Wälzlager 15 besteht aus einem Außenring 16 und einem Innenring 17, die durch in Umfangsrichtung verteilte Wälzkörper 18 relativ drehbeweglich aufeinander abgestützt sind. Der Dichtring 1, der relativ drehfest mit dem Außenring 16 des Wälzlagers 15 verbunden ist, besteht zur statischen Abdichtung gegenüber dem Außenring 16 aus einem ersten Dichtteil 3 und zur dynamischen Abdichtung gegenüber dem relativ beweglichen Innenring aus einem zweiten Dichtteil 5, wobei der zweite Dichtteil 5 mit zwei in axialer Richtung zueinander benachbarten Dichtlippen 11, 12 auf dem Innenring 17 abgestützt ist.

Zur Erfassung der Drehbewegung des drehfest mit dem hier nicht dargestellten Fahrzeugrad verbundenen Außenrings 16 ist ein Multipolring 9 vorgesehen, der auf der dem Drehzahlsensor 8 zugewandten Seite des Stützrings 2 des Dichtrings 1 angeordnet ist. Der Multipolring 9 besteht aus einem magnetisierten Elastomerwerkstoff und weist in Umfangsrichtung aufeinanderfolgende, sich in radialer Richtung erstreckende Nord- und Südpole auf, die sich bei Drehbewegung des Fahrzeugrads abwechselnd am Drehzahlsensor 8 vorbeibewegen.

Der erste Dichtteil 3 und der zweite Dichtteil 5 sind in diesem Ausführungsbeispiel materialeinheitlich und einstückig ineinander übergehend ausgebildet und überdecken den Multipolring 9, der als Zwischenschicht 10 ausgebildet ist. Der Außenring 16 ist in diesem Ausführungsbeispiel mit einer innenumfangsseitig umlaufenden, in Richtung des Innenrings 17 geöffneten Nut 21 versehen, deren Ausdehnung in axialer Richtung im wesentlichen den Abmessungen des ersten Dichtteils 3 in gleicher Richtung entspricht. Der erste und der zweite Dichtteil 3,5 umschließen den den Stützring 2 und die Zwischenschicht 10 auf der dem abzudichtenden Raum 14 abgewandten Seite vollständig. Die Zwischenschicht 10 durch die der Multipolring 9 gebildet ist, ist filmartig dünn ausgebildet und vom elastomeren Werkstoff des ersten und zweiten Dichtteils 3, 5 vollständig umschlossen. Der Multipolring 9 ist dadurch in ausgezeichneter Weise vor gebrauchsdauerverringernden äußeren Einflüssen geschützt.

## Patentansprüche

1. Dichtungsanordnung, umfassend einen Dichtring (1) mit einem sich im wesentlichen in radialer Richtung erstreckenden Stützring (2), einem ersten und zweiten Dichtteil (3, 5) sowie einem Multipolring (9) aus magnetisierbarem Werkstoff, der auf der einem Drehzahlsensor (8) zugewandten Seite des Stützrings (2) angeordnet ist und in Umfangsrichtung aufeinanderfolgende, sich in radialer Richtung erstreckende Nord- und Südpole aufweist, wobei der Stützring (2) in radialer Richtung einerseits mit dem ersten Dichtteil (3) verbunden ist, der relativ drehfest, statisch dichtend ein erstes Maschinenteil (4) anliegend berührt und in radialer Richtung andererseits mit dem zweiten Dichtteil (5) verbunden ist, der relativ drehbeweglich, dynamisch abdichtend an das zweite Maschinenteil (6) anlegbar ist, wobei der erste und der zweite Dichtteil (3, 5) jeweils aus einem elastomeren Werkstoff bestehen und wobei der Multipolring (9) zur Erfassung von Drehbewegungen des ersten Maschinenteils (4) um seine Achse (7) an dem Drehzahlsensor (8) vorbeibeweglich ist, dadurch gekennzeichnet, daß der Multipolring (9) aus einem pastösen, aushärtbaren Werkstoff besteht und als filmartig dünne Zwischenschicht (10) ausgebildet ist und daß der Multipolring (9) vom elastomeren Werkstoff des ersten (3) und/oder zweiten Dichtteils (5) vollständig überdeckt ist.

2. Dichtungsanordnung nach Anspruch 1, dadurch gekennzeichnet, daß der Multipolring (9) aus zumindest zwei von einander abweichenden Magnetwerkstoffen besteht.

3. Dichtungsanordnung nach Anspruch 2, dadurch gekennzeichnet, daß die Magnetwerkstoffe innerhalb des Multipolrings (9) eine im wesentlichen homogene Verteilung aufweisen.

4. Dichtungsanordnung nach Anspruch 2, dadurch gekennzeichnet, daß die Magnetwerkstoffe in Richtung des Drehzahlsensors (8) schichtweise miteinander verbunden sind.

5. Dichtungsanordnung nach einem der Ansprüche 1 bis 4, dadurch gekennzeichnet, daß der Multipolring (9) und der Stützring (2) adhäsiv verbunden sind und eine vormontierbare Einheit bilden.

6. Dichtungsanordnung nach einem der Ansprüche 1 bis 5, dadurch gekennzeichnet, daß der erste und zweite Dichtteil (3, 5) materialeinheitlich und einstückig ineinander übergehend ausgebildet sind.

7. Verfahren zur Herstellung eines Dichtrings nach Anspruch 1 bis 6, dadurch gekennzeichnet, daß in einem ersten Verfahrensschritt zumindest ein pastöser magnetisierbarer Werkstoff zur Erzeugung des Multipolrings (9) auf der dem Drehzahlsensor (8) zugewandten Seite des Stützrings (2) aufgebracht wird, daß der ausgehärtete Multipolring (9) in einem zweiten Verfahrensschritt magnetisiert und in einem dritten Verfahrensschritt durch Vulkanisation des ersten und zweiten Dichtteils (3, 5) von zumindest dem elastomeren Werkstoff des ersten Dichtteils (3) überdeckt wird.

8. Verfahren zur Herstellung eines Dichtrings nach Anspruch 1 bis 6, dadurch gekennzeichnet, daß in einem ersten Verfahrensschritt zumindest ein pastöser magnetisierbarer Werkstoff zur Erzeugung des Multipolrings (9) auf der dem Drehzahlsensor (8) zugewandten Seite des Stützrings (2) aufgebracht wird, daß der ausgehärtete Multipolring (9) in einem zweiten Verfahrensschritt durch Vulkanisation des ersten und zweiten Dichtteils (3, 5) von zumindest dem elastomeren Werkstoff des ersten Dichtteils (3) überdeckt wird und daß der Multipolring (9) in einem dritten Verfahrensschritt magnetisiert wird.

9. Verfahren nach einem der Ansprüche 7 bis 8, dadurch gekennzeichnet, daß der magnetisierbare Werkstoff des Multipolrings (9) als Paste mit zumindest zwei homogen verteilten Magnetwerkstoffen auf den Stützring (2) aufgebracht wird.

10. Verfahren nach einem der Ansprüche 7 bis 8, dadurch gekennzeichnet, daß zur Erzeugung des Multipolrings (9) zumindest zwei Magnetwerkstoffe nacheinander auf den Stützring (2) aufgebracht werden und daß der zweite Magnetwerkstoff erst im Anschluß an die Aushärtung des ersten Magnetwerkstoffs aufgebracht wird.

11. Verfahren nach einem der Ansprüche 7 bis 10, dadurch gekennzeichnet, daß der pastöse Werkstoff zur Erzeugung des Multipolrings (9) auf den Werkstoff des Stützrings (2) aufgebracht und die so gebildete vormontierte Einheit im Anschluß an die Aushärtung des pastösen Werkstoffs des Multipolrings (9) zur Form des Stützrings (2) umgeformt und ausgestanzt wird.

12. Verfahren nach einem der Ansprüche 7 bis 11, dadurch gekennzeichnet, daß durch Vulkanisation von nur einem elastomeren Werkstoff der erste und zweite Dichtteil (3, 5) gleichzeitig erzeugt werden.

## Claims

1. A sealing arrangement comprising a sealing ring (1) with a support ring (2) extending essentially in a radial direction, a first and second sealing part (3,5), and a multi-pole ring (9) of magnetizable material which is arranged on that side of the support ring (2) that faces a rotational-speed sensor (8) and which has circumferentially successive, radially extending north and south poles, the support ring (2) being connected radially, on the one hand, to the first sealing part (3), which rests in a relatively rotationally fixed and a statically sealing manneragainst a first machine part (4), and being connected radially, on the other hand, to the second sealing part (5), which can be placed in a relatively rotatable and dynamically sealing manner against the second machine part (6), the first and the second sealing parts (3,5) each being composed of an elastomeric material and it being possible to move the multi-pole ring (9) past the rotational-speed sensor (8) for the purpose of detecting rotary movements of the first machine part (4) about its axis (7), characterized in that the multi-pole ring (9) is composed of a pasty curable material and is formed as a thin film-like intermediate layer (10), and in that the multi-pole ring (9) is completely covered by the elastomeric material of the first sealing part (3) and/or the second sealing part (5).

2. A sealing arrangement according to claim 1, characterized in that the multi-pole ring (9) is composed of at least two different magnetic materials.

3. A sealing arrangement according to claim 2, characterized in that the magnetic materials are distributed essentially homogeneously within the multi-pole ring (9).

4. A sealing arrangement according to claim 2, characterized in that the magnetic materials are connected to one another in layers in the direction of the rotational-speed sensor (8).

5. A sealing arrangement according to any of claims 1 to 4, characterized in that the multi-pole ring (9) and the support ring (2) are connected adhesively and form a unit which can be preassembled.

6. A sealing arrangement according to any of claims 1 to 5, characterized in that the first and second sealing parts (3,5) are made of the same material and are designed so as to merge integrally into one another.

7. A method for the production of a sealing ring according to any of claims 1 to 6, characterized in that, in a first method step, at least one pasty magnetizable material is applied to that side of the support ring (2) which faces the rotational-speed sensor (8) to form the multi-pole ring (9), in that, in a second method step, the cured multi-pole ring (9) is magnetized and, in a third step, it is covered by at least the elastomeric material of the first sealing part (3) by vulcanization of the first and second sealing parts (3,5).

8. A method for the production of a sealing ring according to any of claims 1 to 6, characterized inthat, in a first method step, at least one pasty magnetizable material is applied to that side of the support ring (2) which faces the rotational-speed sensor (8) to form the multi-pole ring (9), in that, in a second method step, the cured multi-pole ring (9) is covered by at least the elastomeric material of the first sealing part (3) by vulcanization of the first and second sealing parts (3,5), and in that, in a third method step, the multi-pole ring (9) is magnetized.

9. A method according to either of claims 7 and 8, characterized in that the magnetizable material of the multi-pole ring (9) is applied to the support ring (2) as a paste comprising at least two homogeneously distributed magnetic materials.

10. A method according to either of claims 7 and 8, characterized in that, to produce the multi-pole ring (9), at least two magnetic materials are applied one after the other to the support ring (2), and in that the second magnetic material is applied only after the curing of the first magnetic material.

11. A method according to any of claims 7 to 10, characterized in that, to produce the multi-pole ring (9), the pasty material is applied to the material of the support ring (2) and, after the curing of the pasty material of the multi-pole ring (9), the preassembled unit thus formed is shaped to give the shape of the support ring (2) and punched out.

12. A method according to any of claims 7 to 11, characterized in that the first and the second sealing parts (3,5) are produced simultaneously by vulcanization of just one elastomeric material.

## Revendications

1. Dispositif d'étanchéité comprenant une bague d'étanchéité (1) avec une bague d'appui (2), qui s'étend essentiellement dans le sens radial, une première et une seconde pièce d'étanchéité (3, 5), ainsi qu'une bague multipolaire (9) en un matériau magnétisable, qui est disposée sur la face tournée vers un capteur tachymétrique (8) de la bague d'appui (2) et qui présente, dans la direction de la circonférence, successivement des pôles nord et sud qui se succèdent et s'étendent en direction radiale, la bague d'appui (2) étant reliée, dans la direction radiale, d'une part à la première pièce d'étanchéité (3), qui touche de manière adjacente une première pièce de machine (4), de manière relativement résistante à la torsion et à former une étanchéité statique et, dans la direction radiale d'autre part, à la seconde pièce d'étanchéité (5) qui peut être adjacente à la seconde pièce de machine (6), de manière relativement mobile en rotation et à former une étanchéité dynamique, la première et la seconde pièce d'étanchéité (3, 5) étant à chaque fois en un matériau élastomère et la bague multipolaire (9) servant à capter les mouvements de rotation de la première pièce de machine (4) autour de son axe (7) pouvant être passée devant le capteur tachymétrique (8), caractérisé en ce que la bague multipolaire (9) est en un matériau pâteux, durcissable formant une mince couche intermédiaire (10) à la manière d'un film et que la bague multipolaire (9) est entièrement recouverte par le matériau élastomère de la première (3) et/ou de la seconde pièce d'étanchéité (5).

2. Dispositif d'étanchéité selon la revendication 1, caractérisé en ce que la bague multipolaire (9) est constituée au moins de deux matériaux magnétiques différents.

3. Dispositif d'étanchéité selon la revendication 2, caractérisé en ce que les matériaux magnétiques présentent une répartition essentiellement homogène à l'intérieur de la bague multipolaire (9).

4. Dispositif d'étanchéité selon la revendication 2, caractérisé en ce que les matériaux magnétiques sont reliés entre eux, par couches successives en direction du capteur tachymétrique (8).

5. Dispositif d'étanchéité selon une des revendications 1 à 4, caractérisé en ce que la bague multipolaire (9) et la bague d'appui (2) sont reliées par adhésion et forment une unité pouvant être pré-montée.

6. Dispositif d'étanchéité selon une des revendications 1 à 5, caractérisé en ce que la première et la seconde pièce d'étanchéité (3, 5) sont conçues dans un même matériau, de manière qu'elles se confondent pour ne former qu'une seule pièce.

7. Procédé de fabrication d'une bague d'étanchéité selon la revendication 1 à 6, caractérisé en ce qu'au cours d'une première étape du procédé, au moins un matériau pâteux magnétisable est appliqué sur la face tournée vers le capteur tachymétrique (8) de la bague d'appui (2) pour réaliser la bague multipolaire (9), que la bague multipolaire (9) durcie est magnétisée au cours d'une seconde étape du procédé et, au cours d'une troisième étape du procédé, recouverte au moins par le matériau élastomère de la première pièce d'étanchéité (3), par vulcanisation de la première et de la seconde pièce d'étanchéité (3, 5).

8. Procédé de fabrication d'une bague d'étanchéité selon la revendication 1 à 6, caractérisé en ce qu'au cours d'une première étape du procédé, au moins un matériau pâteux magnétisable est appliqué sur la face tournée vers le capteur tachymétrique (8) de la bague d'appui (2) pour réaliser la bague multipolaire (9), que la bague multipolaire (9) durcie est, au cours d'une seconde étape du procédé, recouverte au moins par le matériau élastomère de la première pièce d'étanchéité (3), par vulcanisation de la première et de la seconde pièce d'étanchéité (3, 5) et que la bague multipolaire (9) est magnétisée au cours d'une troisième étape du procédé.

9. Procédé selon une des revendications 7 à 8, caractérisé en ce que le matériau magnétisable de la bague multipolaire (9) est appliqué sur la bague d'appui (2) sous forme de pâte constituée au moins de deux matériaux magnétiques, répartis de manière homogène.

10. Procédé selon une des revendications 7 à 8, caractérisé en ce que, pour réaliser la bague multipolaire (9), au moins deux matériaux magnétiques sont appliqués successivement sur la bague d'appui (2) et que le second matériau magnétique n'est appliqué qu'après le durcissement du premier matériau magnétique.

11. Procédé selon une des revendications 7 à 10, caractérisé en ce que le matériau pâteux pour réaliser la bague multipolaire (9) est appliqué sur le matériau de la bague d'appui (2) et que l'unité ainsi formée et pré-montée est ensuite, après durcissement du matériau pâteux de la bague multipolaire (9), déformée et découpée à la matrice, de manière à former la bague d'appui (2).

12. Procédé selon une des revendications 7 à 11, caractérisé en ce que, par vulcanisation d'un seul matériau élastomère, la première et la seconde pièce d'étanchéité (3, 5) sont produites en même temps.
